# EUROPEAN PATENT SPECIFICATION

(11) **EP 0 371 933 B1**
(45) Date of publication and mention of the grant of the patent: **08.09.1993**
(21) Application number: 89830525.5
(22) Date of filing: 28.11.1989
(51) Int. Cl.: H02K 15/04, H02K 3/18

(54) **A method of manufacturing a winding for the stator of a direct-current electrical machine**
Verfahren zur Herstellung einer Wicklung für den Ständer einer elektrischen Gleichstrommaschine
Méthode de fabrication d'un enroulement pour le stator d'une machine électrique à courant continu

(30) Priority: 30.11.1988 IT 6806988
(43) Date of publication of application: 06.06.1990
(73) Proprietor: INDUSTRIE MAGNETI MARELLI S.p.A., 20145 Milano (IT)
(72) Inventor: Povero, Felice, I-20052 Monza (Milano) (IT); Voza, Angelo, I-84063 Paestum (Salerno) (IT)
(74) Representative: Quinterno, Giuseppe

(56) References cited:
- EP-A- 0 172 043
- DE-C- 630 697
- GB-A- 1 343 159
- US-A- 2 011 114
- US-A- 2 261 200
- PATENT ABSTRACTS OF JAPAN vol. 3, no. 78 (E-121)(134) 05 July 1979, & JP-A-54 57602 (SANYO DENKI) 09 May 1979,
- PATENT ABSTRACTS OF JAPAN vol. 13, no. 81 (E-719)(3429) 23 February 1989, & JP-A-63 262046 (MITSUBISHI) 28 October 1988,

## Description

The present invention relates to a method of manufacturing a winding for the stator of a direct-current electrical machine, particularly a starter motor for an internal combustion engine. A known method for manufacturing a winding for DC and AC electrical machines is disclosed in DE-C-630697.

The method according to the invention is characterised in that it comprises the following steps:
- winding at least one rigid, plastically-deformable conductor substantially into a conical helix,
- covering the conductors with a layer of electrically-insulating material, and then
- squashing the helical conductor axially so as to cause the interpenetration of its turns.

Characteristics and advantages of the present invention will become clear from the detailed description which follows with reference to the appended drawings, provided by way of non-limiting example, in which:
Figures 1, 2, 3 and 4 are perspective views showing successive stages of the method according to the present invention, and
Figure 5 is a front elevational view of four windings upon completion of the operations illustrated in Figures 1 to 4.

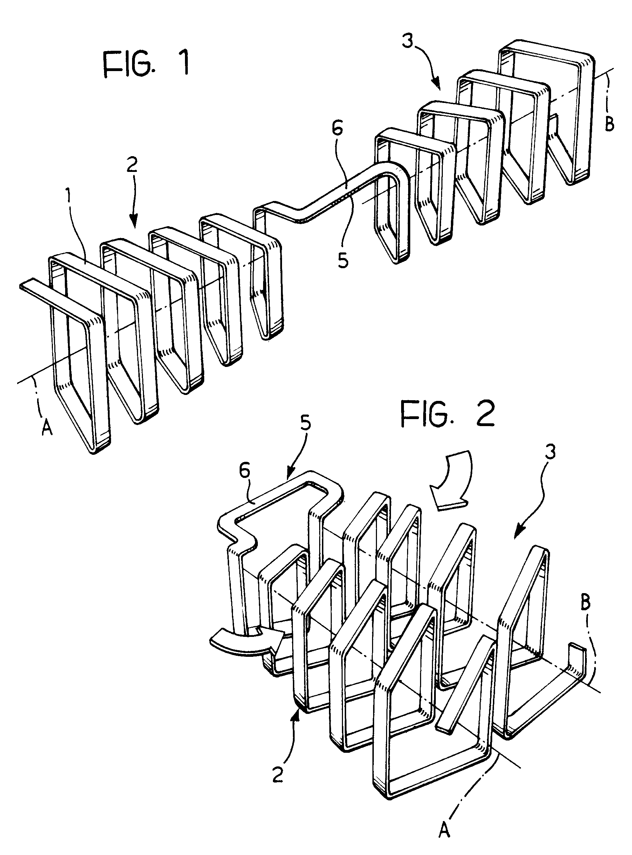

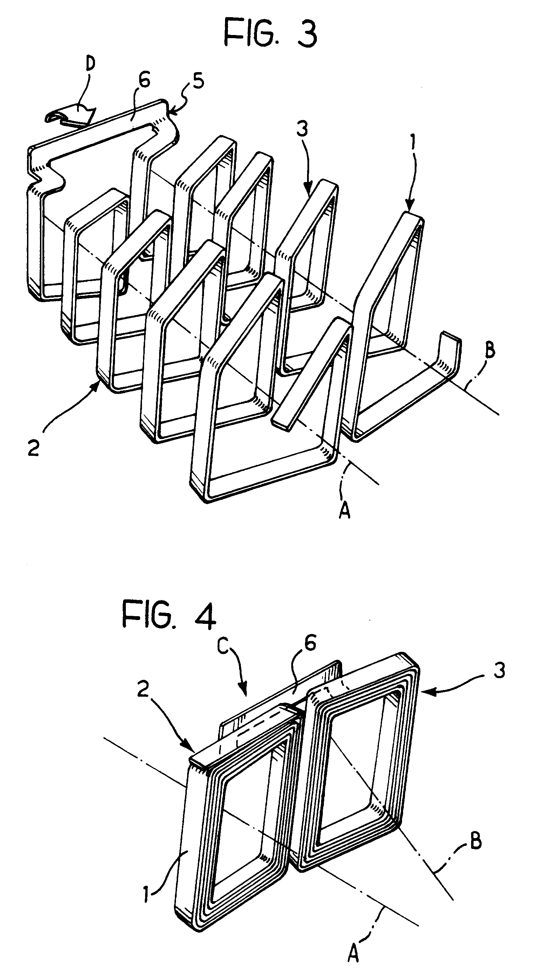

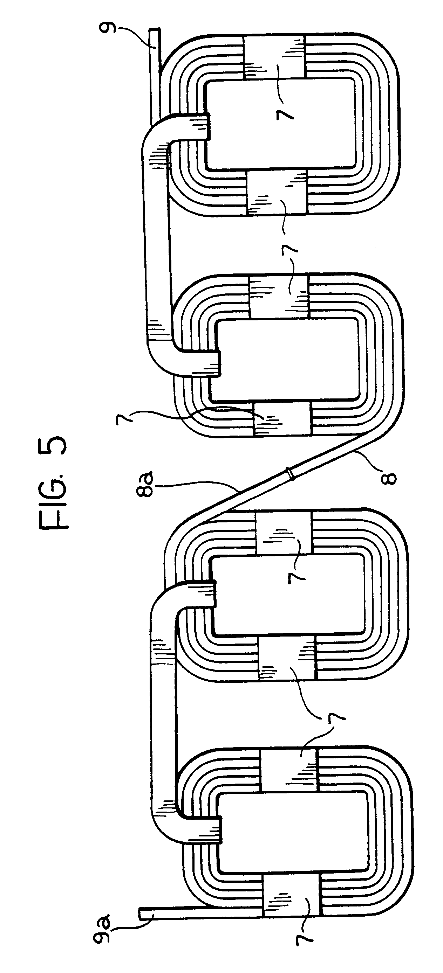

With reference to the drawings, a rigid metal strip of electrically-conductive material, for example copper, aluminium or alloys thereof, is indicated 1. The strip 1 is deformed plastically so as to form two conical helices, indicated 2 and 3 respectively, having rectangular turns. In the embodiment illustrated in the drawings, the axes A and B of the helices 2 and 3 are aligned and the cones of the two helices converge. The helices 2 and 3 are formed so that the outwardly-facing surface of the strip in each turn is substantially flush with the inwardly-facing surface of the adjacent larger turn. The helices 2 and 3 are interconnected by a portion 5 of the strip 1 which is bent to form an S-shape with a straight section 6, parallel to the common axis of the two helices. The strip 1 is bent automatically to produce the helices 2 and 3 with the use of known machines conventionally used for the manufacture of windings. Upon completion of the bending operation illustrated in Figure 1, the helices 2 and 3 are pivoted towards each other by the bending of the ends of the S-shaped connecting portion 5. As shown in Figure 2, upon completion of this operation, the axes of the helices 2 and 3 are substantially parallel. The straight section 6 of the connecting portion 5 is then bent in the sense indicated by the arrow D in Figure 3, so that the C-shaped portion 5 is brought into a plane perpendicular to the plane containing the axes A and B. With reference to Figure 5, one end 8 of the strip 1 is connected by welding to an end 8a of a second pair of windings. After this operation, the helices 2 and 3 are covered with an electrically-insulating varnish (for example, an epoxy-resin-based varnish) applied electrostatically. A stage of baking the varnish in an oven then follows. The helices 2 and 3 are then squashed axially so that the turns are made to interpenetrate, that is, to produce the two windings shown in Figure 4. Plastics clips 7 are then applied to each winding thus produced, as shown in Figure 5. The ends 9 and 9a of the four windings are connected to an electrical supply circuit after the four windings have been positioned on their respective stator poles of the electric motor.

Alternatively, the four windings shown in Figure 5 may be produced from a single strip by winding successive portions of the latter into conical helices, as described above.

The insulation of the strip 1 by means of varnishing is less bulky than conventional insulation produced by wrapping with paper and it is therefore possible to increase the cross-sections of the strips in a winding of a given overall size, and thus to achieve an increase in the power of the electric motor.

## Claims

1. A method of manufacturing a winding for the stator of a direct-current electrical machine, particularly a starter motor for an internal combustion engine, characterised in that it comprises the following steps:
- winding at least one rigid, plastically-deformable conductor (1) substantially into a conical helix(2),
- covering the conductor (1) with a layer of electrically-insulating material, and then
- squashing the helical conductor (1) axially so as to cause the interpenetration of its turns.

2. A method according to Claim 1, particularly for producing a pair of windings for the stator of an electrical machine from a single conductor, characterised by the following steps:
- winding first and second end portions of the conductor (1) into conical helices (2, 3), the portions which are wound into helices (2, 3) being joined by an intermediate connecting portion (5),
- covering the conductor (1) with a layer of electrically-insulating material, and then
- squashing the helical (2, 3) conductor (1) axially so as to cause the interpenetration of its turns.

3. A method according to Claim 2, characterised in that the conductor (1) is wound so as to form first (2) and second (3) conical helices with respective axes (A, B) which are substantially coincident, and in that the intermediate connecting portion (5) is constituted by a substantially S-shaped section of conductor, the intermediate portion (6) of which is substantially parallel to the axis of the two helical portions (2, 3).

4. A method according to Claim 3, characterised in that the first (2) and second (3) helical portions of the conductor (1) are pivoted towards each other from the configuration in which the axes (A, B) of the two helices are substantially aligned to a configuration in which the axes (A, B) are substantially parallel.

5. A method according to Claim 4, characterised in that the S-shaped portion (5) connecting the helical portions (2, 3) is bent from a configuration in which it lies substantially parallel to the plane containing the axes (A, B) of the two helical portions to a configuration in which it extends perpendicular to that plane.

6. A method according to Claim 1, particularly for producing a plurality of windings for the stator of an electrical machine from a single conductor, characterised by the following steps;
- winding adjacent portions of the conductor (1) substantially into conical helices (2), the portions which are wound into helices being joined by intermediate connecting portions (5),
- covering the conductor (1) with a layer of electrically-insulating material, and then
- squashing each of the helical portions (2) of the conductor (1) so as to cause the interpenetration of its turns.

7. A method according to any one of the preceding claims, characterised in that the conical helix (2) has substantially rectangular turns.

8. A method according to any one of the preceding claims, characterised in that the conductor (1) is constituted by a metal strip.

## Patentansprüche

1. Verfahren zur Herstellung einer Wicklung für den Ständer einer elektrischen Gleichstrommaschine, insbesondere eines Anlassermotors für eine Brennkraftmaschine, dadurch gekennzeichnet, daß es die folgenden Schritte umfaßt:
- Wickeln mindestens eines starren, plastisch verformbaren Leiters (1) zu im wesentlichen einer konischen Helix (2),
- Überziehen des Leiters (1) mit einer Schicht aus elektrisch isolierendem Material, und anschließend
- axiales Zusammendrücken des helixförmigen Leiters (1), um das Ineinandergreifen seiner Windungen zu bewirken.

2. Verfahren nach Anspruch 1, insbesondere zum Herstellen eines Paares von Wicklungen für den Ständer einer elektrischen Maschine aus einem einzigen Leiter, gekennzeichnet durch die folgenden Schritte:
- Wickeln erster und zweiter Endabschnitte des Leiters (1) zu konischen Helixen (2, 3), wobei die Abschnitte, welche zu Helixen (2, 3) gewickelt werden, durch einen verbindenden Zwischenabschnitt (5) miteinander verbunden sind,
- Überziehen des Leiters (1) mit einer Schicht aus elektrisch isolierendem Material, und anschließend
- axiales Zusammendrücken des helixförmigen (2, 3) Leiters (1), um das Ineinandergreifen seiner Windungen zu bewirken.

3. Verfahren nach Anspruch 2, dadurch gekennzeichnet, daß der Leiter (1) so gewickelt ist, daß er erste (2) und zweite (3) konische Helixe mit jeweiligen Achsen (A, B) bildet, welche im wesentlichen übereinstimmen, und dadurch, daß der verbindende Zwischenabschnitt (5) durch einen im wesentlichen S-förmigen Abschnitt eines Leiters gebildet wird, dessen Zwischenabschnitt (6) im wesentlichen parallel zu der Achse der beiden helixförmigen Abschnitte (2, 3) ist.

4. Verfahren nach Anspruch 3, dadurch gekennzeichnet, daß die ersten (2) und zweiten (3) helixförmigen Abschnitte des Leiters (1) aus der Konfiguration, in der die Achsen (A, B) der beiden Helixe im wesentlichen miteinander ausgerichtet sind, zueinander geschwenkt sind in eine Konfiguration, in der die Achsen (A, B) im wesentlichen parallel sind.

5. Verfahren nach Anspruch 4, dadurch gekennzeichnet, daß der S-förmige Abschnitt (5), der die helixförmigen Abschnitte (2, 3) verbindet, aus einer Konfiguration, in der er im wesentlichen parallel zu der Ebene liegt, welche die Achsen (A, B) der beiden helixförmigen Abschnitte enthält, in eine Konfiguration gebogen wird, in der er rechtwinklig zu dieser Ebene verläuft.

6. Verfahren nach Anspruch 1, insbesondere zum Herstellen einer Vielzahl von Wicklungen für den Ständer einer elektrischen Maschine aus einem einzigen Leiter, gekennzeichnet durch die folgenden Schritte:
- Wickeln beieinanderliegender Abschnitte des Leiters (1) im wesentlichen zu konischen Helixen (2), wobei die Abschnitte, die zu Helixen gewickelt werden, durch verbindende Zwischenabschnitte (5) verbunden sind,
- Überziehen des Leiters (1) mit einer Schicht aus elektrisch isolierendem Material, und anschließend
- Zusammendrücken eines jeden der helixförmigen Abschnitte (2) des Leiters (1), um das Ineinandergreifen seiner Windungen zu bewirken.

7. Verfahren nach einem der vorhergehenden Ansprüche, dadurch gekennzeichnet, daß die konische Helix (2) im wesentlichen rechteckige Windungen hat.

8. Verfahren nach einem der vorhergehenden Ansprüche, dadurch gekennzeichnet, daß der Leiter (1) durch einen Metallstreifen gebildet wird.

## Revendications

1. Procédé de fabrication d'un enroulement pour le stator d'une machine électrique à courant continu, en particulier un démarreur pour un moteur à combustion interne, caractérisé en ce qu'il comprend les étapes suivantes :
- enrouler au moins un conducteur (1) rigide plastiquement déformable essentiellement en hélice conique (2),
- recouvrir le conducteur (1) à l'aide d'une couche de matériau diélectrique, et ensuite
- aplatir le conducteur hélicoïdal (1) dans l'axe pour que ses spires pénètrent les unes dans les autres.

2. Procédé selon la revendication 1, en particulier pour produire une paire d'enroulements pour le stator d'une machine électrique à partir d'un seul conducteur, caractérisé par les étapes suivantes :
- enrouler les première et seconde portions d'extrémité du conducteur (1) en hélices coniques (2, 3), les portions qui sont enroulées en hélices (2, 3) étant jointes par une portion intermédiaire les reliant (5),
- recouvrir le conducteur (1) d'une couche de matériau diélectrique, et ensuite
- aplatir le conducteur (1) hélicoïdal (2, 3) dans l'axe pour que ses spires pénètrent les unes dans les autres.

3. Procédé selon la revendication 2, caractérisé en ce que le conducteur (1) est enroulé de façon à former une première (2) et une seconde (3) hélices coniques avec des axes respectifs (A, B) qui coïncident pratiquement, et en ce que la portion intermédiaire les reliant (5) est constituée par une section du conducteur pratiquement en forme de S, dont la portion intermédiaire (6) est pratiquement parallèle à l'axe des deux portions hélicoïdales (2, 3).

4. Procédé selon la revendication 3, caractérisé en ce que les première (2) et seconde (3) portions hélicoïdales du conducteur (1) pivotent l'une vers l'autre à partir de la configuration où les axes (A, B) des deux hélices sont pratiquement alignés par rapport à une configuration où les axes (A, B) sont pratiquement parallèles.

5. Procédé selon la revendication 4, caractérisé en ce que la portion en forme de S (5) reliant les portions hélicoïdales (2, 3) est pliée à partir d'une configuration où elle est pratiquement parallèle au plan contenant les axes (A, B) des deux portions hélicoïdales par rapport à une configuration où elle est perpendiculaire à ce plan.

6. Procédé selon la revendication 1, en particulier pour produire une pluralité d'enroulements pour le stator d'une machine électrique à partir d'un seul conducteur, caractérisé par les étapes suivantes :
- enrouler les portions adjacentes du conducteur (1) pratiquement en hélices coniques (2), les portions qui sont enroulées en hélices étant jointes par des portions intermédiaires les reliant (5),
- recouvrir le conducteur (1) d'une couche de matériau diélectrique, et ensuite
- aplatir chacune des portions hélicoïdales (2) du conducteur (1) pour que ses spires pénètrent les unes dans les autres.

7. Procédé selon l'une quelconque des revendications précédentes, caractérisé en ce que l'hélice conique (2) a pratiquement des spires rectangulaires.

8. Procédé selon l'une quelconque des revendications précédentes, caractérisé en ce que le conducteur (1) est constitué par une bande métallique.
